# EUROPEAN PATENT SPECIFICATION

(11) **EP 3 260 484 B1**
(45) Date of publication and mention of the grant of the patent: **07.10.2020**
(21) Application number: 17460028.8
(22) Date of filing: 25.05.2017
(51) Int. Cl.: C08H 1/06

(54) **METHOD OF PRELIMINARY HYDROLYSIS OF CREATINE-CONTAINING RAW MATERIALS, IN PARTICULAR BRISTLES**
VERFAHREN ZUR VORLÄUFIGEN HYDROLYSE VON KREATINHALTIGEN ROHSTOFFEN, INSBESONDERE BORSTEN
PROCÉDÉ D'HYDROLYSE PRÉLIMINAIRE DE MATIÈRES PREMIÈRES CONTENANT DE LA CRÉATINE, EN PARTICULIER DES POILS

(30) Priority: 23.06.2016 PL 41769516
(43) Date of publication of application: 27.12.2017
(73) Proprietor: Przedsiebiorstwo Wielobranzowe "RAWIMPEX" Marek Czerniej, 96-200 Rawa Mazowiecka (PL)
(72) Inventor: Czerniej, Marek, 96-200 Rawa Mazowiecka (PL)
(74) Representative: Zajaczkowski, Wojciech

(56) References cited:
- EP-A1- 2 333 151

## Description

The invention relates to the method of preliminary hydrolysis of keratin-containing raw materials, in particular bristles as a by-product of animal origin.

Keratin is a specific, very resistant animal protein. Keratin is mostly composed of essential amino acids, which are an indispensable part of animal diet. Unfortunately, keratin-containing raw materials cannot be digested by animals in their digestive systems. The protein of keratin occurs as a long chain with numerous durable bonds between S-S type molecules. Due to the numerous durable bonds, it is impossible to hydrolyse the keratin protein without any preliminary chemical hydrolysis. An additional difficulty is presented by the structure of the keratin-containing materials because, for instance, the structure of bristles or feathers is not uniform. Keratin layers are deposited on a very resistant frame; the layers can be relatively easily activated for further enzymatic hydrolysis, whereas the frame itself remains resistant to the processes attempted so far.

Patent Description no. 140977 discloses a production method of ionexchange materials out of keratin-containing raw and waste materials, in particular wool and feathers, wherein the method consists in the treatment of the keratin-containing raw material with hydrochloric acid, phosphoric acid or sulphuric acid, the concentration of which is 15-25 % at the temperature of 40-60 °C for 1-3 h, or alkali, i.e. carbonate or hydroxide solutions, the concentration of which is 0.2- 20 % at the temperature of 20-80 °C for 0.5-3 h, with the ratio of raw material mass to the bath volume of 1:10 to 1:40, whereas during alkaline hydrolysis it is preferable to add a reducing agent in the amount of 0.5-12 %.

Patent Description no. 179342 discloses an activation method for keratin-containing raw materials such as feathers, wool, bristles and animal hair or coat prior to enzymatic hydrolysis for cosmetic purposes, prior to treatment with proteolytic enzymes. In this method, prior to enzymatic hydrolysis, the raw material is exposed to aqueous solutions of alkali hydroxides the concentration of which does not exceed 10 %, at the temperature of 5 to 40 °C for up to 8 hours.

In the paper by Pawel Staron, Marcin Banach, Zygmunt Kowalski and Zbigniew Wzorek, published in the Technical Journal of the Cracow University of Technology (1-Ch/2010, Bulletin 10), a description is provided of methods of keratin degradation in turn by the action of temperature, acids and bases as well as enzymatic degradation.

According to the invention, the method of preliminary hydrolysis of keratin-containing raw materials, in particular bristles, consists in the exposure of the raw material to live steam at the minimum pressure of 5 bar and preferably at the temperature of 150 °C, the process being aided by calcium hydroxide in the minimum amount of 3 % for min. 20 minutes.

As a result, pork bristles are liquefied as intermolecular bonds are destroyed and proteins are preliminarily hydrolysed. The entirety of bristles undergoes hydrolysis. The obtained product is liquid without any traces of its previous structure. The entire product undergoes disposal. The obtained product may be transferred to a biogas plant. In the biogas plant, environmentally friendly energy and balanced fertiliser can be obtained. Calcium hydroxide used in the preliminary hydrolysis process is suitable for agricultural use of the digestate.

The invention is described by an embodiment.

### Embodiment:

After placing 3.9 kg of bristles in a stainless steel vessel, 0.14 kg of calcium hydroxide in the form of hydrated lime was added. The vessel was closed and live steam at the pressure of 5 bar was supplied. The steam was supplied to the vessel bottom so that the entire mass of the substrate was exposed to steam. The process lasted for 25 min., while the air inside the vessel was evacuated. After cooling down, a 500 g sample was collected for a trial biogas production at the temperature of 38 °C. For comparison purposes, another trial biogas production was simultaneously carried out under the same conditions, using raw bristles, raw bristles with the addition of calcium hydroxide and bristles thermally processed by live steam at the pressure of 5 bar but without any calcium hydroxide added. After the period of 30 days, no gasification effect was observed for the samples of raw bristles and raw bristles with the addition of calcium base. The bristles retained their original structure and no gas-producing effect was obtained. A sample of the bristles exposed to thermal processing without any addition of calcium hydroxide showed a trace-level gasification process, but the bristles maintained their original structure and the quantity of gases was low. For the bristles exposed to preliminary hydrolysis by live steam at the pressure of 5 bar in the environment of calcium hydroxide, the gasification process occurred quickly and the post-fermentation sediment was in the form of hydrated sludge.

## Claims

1. Method of preliminary hydrolysis of keratin-containing raw materials, in particular bristles, **characterised in that** the raw material is exposed to live steam at the minimum pressure of 5 bar and preferably at the temperature of 150 °C, the process being aided by calcium hydroxide in the minimum amount of 3 % for min. 20 minutes.

## Patentansprüche

1. Die Art und Weise der Vorhydrolyse von Rohstoffen, die Keratin enthalten, vor allem das Keratin der Borste, **dadurch gekennzeichnet, dass** der Rohstoff der Wirkung von heißem Wasserdampf von min.5 bar Druck und günstig 150 °C Temperatur ausgesetzt wird, und zwar bei Mitwirkung von Calciumhydroxid in einer Menge von min. 3% über einen Zeitraum von min. 20 Minuten.

## Revendications

1. Procédé de pré-hydrolyse de matières premières contenant de la kératine, notamment des poils, **caractérisé par le fait que** la matière première est exposée à de la vapeur vive à une pression de 5 bars minimum et une température de préférence de 150 °C avec l'interaction de l'hydroxyde de calcium en une quantité d'au moins 3% pour une durée de 20 minutes minimum.
